# EUROPEAN PATENT SPECIFICATION

(11) **EP 3 567 679 B1**
(45) Date of publication and mention of the grant of the patent: **29.09.2021**
(21) Application number: 18171607.7
(22) Date of filing: 09.05.2018
(51) Int. Cl.: H01R 4/62, H01R 4/70, H01R 43/00, H01R 4/02, H01R 13/52, H01R 101/00

(54) **SEALED ELECTRICAL CONNECTION BETWEEN A FIRST CONDUCTOR AND A SECOND CONDUCTOR AND CORRESPONDING PRODUCTION METHOD**
DICHTE ELEKTRISCHE VERBINDUNG ZWISCHEN EINEM ERSTEN LEITER UND EINEM ZWEITEN LEITER UND ENTSPRECHENDES HERSTELLUNGSVERFAHREN
CONNEXION ÉLECTRIQUE SCÉLLÉE ENTRE UN PREMIER ET UN SECOND CONDUCTEUR ET METHODE DE PRODUCTION ASSOCICIÉE

(43) Date of publication of application: 13.11.2019
(73) Proprietor: Tyco Electronics Belgium EC bvba, 8020 Oostkamp (BE)
(72) Inventor: DEVOS, Peter, 9032B Wondelgem (BE); MAES, Henk, 8810A Lichtervelde (BE)
(74) Representative: Patentanwaltskanzlei WILHELM & BECK

(56) References cited:
- EP-A1- 2 913 895
- DE-A1- 1 665 266
- DE-A1-102011 087 038
- DE-B- 1 072 674

## Description

The invention relates to an electrical connection between a first conductor and a second conductor, in particular to an electrical connection between a bus bar and an aluminium sheet, for example for a current transport system for a battery, for example for a battery of a motor vehicle. The invention further relates to a battery with an electrical system which comprises the electrical connection and to a method of producing the electrical connection.

In the state of the art, it is well known to connect a first conductor and a second conductor by a welding layer.

DE 1 072 674 teaches an arrangement to fasten a grounding conductor to a casing.

DE 1 665 266 teaches a connection for a non-metallic electric line.

DE 10 2011 087 038 A1 teaches a current tap element for an energy storage element.

EP 2 913 895 A1 teaches a wire cable assembly.

A problem of the known electrical connections is a long-term stability of the electrical contact between the first conductor and the second conductor.

The object of the proposed electrical connection is to improve the long-term stability of the electrical contact between the first conductor and the second conductor.

The object of the invention is attained by the independent claims. Further embodiments of the invention are disclosed in the dependent claims.

The proposed electrical connection has the advantage that an electrical interface between a first and second contact face of the first and the second conductor is sealed against environmental influence. Therefore, it is possible to reduce the environmental influence. For example it is possible to reduce the influence of oxygen and/or of humidity that can degrade the electrical contact between the first contact face and the second contact face. Therefore, the proposed seal ring is tight against fluid, dust and/or gas.

The proposed electrical connection additionally has the advantage that the sealing can easily be attained by depositing sealing material in a reservoir space. The reservoir space is advantageously formed by a first side face of the first contact face and a second side face of the second contact face. Therefore, no further means are necessary to hold the sealing material at a boundary area between the first contact face and the second contact face. The sealing material is embodied as a sealing ring which seals the interface between the first contact face and the second contact face. A boundary area surrounds the first contact face laterally and is a circumferential gap between the first contact face and the second contact face.

The first conductor comprises a first contact face. The first contact face is laterally confined by a first side face. The second conductor comprises a second contact face. The second contact face is surrounded by a rim. The rim has a second side face at an inner side that surrounds the second contact face. The second side face confines a contact space above the second contact face. The first contact face is arranged in the contact space and on the second contact face. An electrical contact is formed between the first contact face and the second contact face. Therefore, electrical current can flow between the first contact face and the second contact face. The sealing ring seals the boundary area of the first contact face and the second contact face, which means fills up the circumferential gap around the first contact face. The sealing may be a dust tight sealing and/or a fluid tight sealing and/or a gas tight sealing to prevent dust, water and/or oxygen from reaching the contact area between the first contact face and the second contact face. Therefore, the long-term stability of the electrical contact between the first and the second contact face is improved. Using the first and the second side face to provide a reservoir space is a simple embodiment for forming a sealing ring which is additionally space-saving.

The first conductor and/or the second conductor are made of electrical conductive material. For example, the first conductor and the second conductor are made of different electrical materials. For example, the first conductor and the second conductor are made of different metals. Depending on the used embodiment, the first conductor and/or the second conductor have the shape of plates or stripes for example.

The surrounding rim of the second contact face improves a precise positioning of the first contact face within the second contact face. Additionally, the rim defines a predetermined volume and a predetermined thickness for the sealing material to attain a sufficient sealing. For example, the sealing material can be filled until an upper side of the rim. Furthermore, a mechanical connection between the first and the second conductor is provided by the sealing ring which is arranged in a lateral direction between the first conductor and the second conductor. As a result, the mechanical connection between the first conductor and the second conductor in a lateral direction is improved. The increased lateral mechanical fixing improves a long term stability of the sealing ring. The increased lateral fixing between the first conductor and the second conductor reduces also friction corrosion since the sealing ring reduces a relative lateral movement between the first conductor and the second conductor. This advantage may be improved by stiff sealing material that is arranged between the first and the second side face.

The high mechanical stability is of advantage for applications where the electrical connection gets a lot of shocks or vibrations. For example, if the electrical connection is mounted in a car, then a robust mechanical fixing and a robust tight sealing is useful.

The rim is for example made in one piece with the second contact face. Therefore, a simple producing process can be used by forming the second contact face with the rim in the second conductor.

As a sealing material for example a fluid material or a soft material may be used. The fluid or soft sealing material can easily be filled in the reservoir space. After filling the reservoir space and forming a sealing ring around the first contact face, the sealing material is cured to a sealing ring. After the curing, the sealing ring may be tight enough to prevent water or gas for example oxygen from reaching the interface between the first contact face and the second contact face.

In a further embodiment, the electrical contact between the first and the second contact face are improved by a welding layer. The welding layer may be processed by an ultrasonic welding process or by a laser welding process. The welding layer reduces the electrical resistance between the first contact face and the second contact face. Furthermore, the welding layer increases the mechanical fixing between the first and the second conductor. The increased mechanical fixing improves a long term stability of the sealing ring. The high mechanical stability is of advantage for applications of the electrical connection where the electrical connection gets a lot of shocks. For example, if the electrical connection is mounted in a car, which gets a lot of shocks, then a robust mechanical fixing and a robust tight sealing is useful.

In a further embodiment, the first connection section extends above the contact space. Therefore, it is not necessary to provide a deep recess in the second conductor or to form a high rim for the contact space. Therefore, less sealing material is sufficient to fill the reservoir space and to provide a secure and robust sealing of the interface between the first contact face and the second contact face. This means that the sealing ring has a height which is smaller than a height of the first side face. For example, the sealing ring has a height smaller than 50% of the height of the first side face. Furthermore, the sealing ring may not fill up the whole height of the reservoir space. For example, the sealing ring may have a height smaller than 80% of the reservoir space.

In a further embodiment, the rim with the second side face is produced by a forming process. This means that the second conductor is formed in such a way that the second contact face with the rim is produced. For example, a stamping process can be used to stamp a recess in a surface of the second conductor. The second contact face is a bottom face of the recess. The recess forms the conductor space. Inner side faces of the recess form the second side face.

In a further embodiment, a second conductor with a shape of a plate can be formed by bending rim areas of the plate to a circumferential rim which circumvents a second contact face in the middle of the plate. The proposed processes are simple and can easily be performed.

The reservoir space comprises in a cross-section view a shape that narrows in direction to the second contact face. The cross-section is seen in a plane perpendicular to a plane of the second contact face. The narrowing cross-section shape has the advantage that the opening of the reservoir space is relatively wide. Therefore, the sealing material can easily be filled in the reservoir. Furthermore, it is sufficient if small amounts of the sealing material flow to the boundary area between the first contact face and the second contact face and close the circumferential interface. This process is simplified by using fluid sealing material, which is cured after flowing to the boundary area and after forming a circumferential ring.

In a further embodiment, the cross-section shape of the reservoir space has an opening angle of about 45°, preferably less than 45°. A smaller opening angle has the advantage that the height of the reservoir space is relative large compared to the width of the reservoir space. The diameter of the sealing ring which extends along the height of the reservoir space. Therefore, a reservoir space with a cross section shape with a smaller opening angle results in needing less sealing material to produce a sealing ring with a large diameter which provides a robust sealing ring.

In a further embodiment, the first contact face has a rectangular shape and/or the second contact face has a rectangular shape. Especially a rectangular shape with rounded corners for the first contact face and/or the second contact face provides a simple and robust design for a simple and robust sealing ring.

In a further embodiment, the first contact section is embodied in one piece with a first further section. The first further section is connected with the first contact section by a bent section. The bent section is guided away from the first contact section. Therefore, it is possible to place the first contact section in the contact space and to provide a reservoir space between a surface of the bent section of the first contact section and the rim of the second contact section.

Therefore, the surface of the bent section forms a part of the first side face. Therefore, it is not necessary to form additional to the surface of the bent section a further side face in the surface of the bent section. The production of the first contact section is facilitated.

In a further embodiment, the second contact section is embodied in one piece with a second further section. The second further section is connected with the first contact section by a second bent section. The second bent section is guided away from the first contact section and may be guided back to a plane which is nearly on the same height as the second contact face. The second bent section provides an improved flexibility between the second further section and the second contact section.

Depending on the used embodiment, the second bent section forms a part of the second side face of the second contact face. Therefore, it is not necessary to form an additional rim at the side of the second bent section. This simplifies the design and facilitates the production of the second contact face.

In a further embodiment, the first conductor and the second conductor are made of different metal materials. For example the first conductor is made of copper and the second conductor is made of aluminium. The first conductor may be embodied as a bus bar, especially as a copper bus bar. The second conductor may be embodied as a thin plate or a thin stripe especially made of aluminium.

The sealing materials may be for example acrylics, polyurethanes, epoxy resins, silicones etc. The first conductor may be embodied as a metal plate or a metal stripe. The second conductor may embodied as a metal plate or as a metal stripe.

The electrical connection may be applied as a part of an electrical conductor system of a battery. For example several batteries may be connected via an electrical conductor system with the connection of a first conductor and a second conductor. The battery may comprise at least one battery cell, wherein the second conductor is connected with at least one electrical contact of a battery cell. For example several battery cells are provided which are electrically connected with the second conductor. The second conductor may be made of a thin metal plate, for example made of aluminium.

In a further embodiment, the first conductor is electrically connected via a further conducting line with an electrical conductor system of a further battery. The electrical conductor system of the further battery may be embodied identical to the electrical conductor system of the battery.

We propose a method as defined in claim 11 for producing the electrical and mechanical connection between a first conductor and a second conductor. The first conductor and the second conductor are provided. The first conductor and the second conductor are made of electrical conductive material. The first conductor has a first section with a first contact face. The first contact face is laterally confined by a first side face. The second conductor has a second section with a second contact face. The second contact face is surrounded by a rim with a second side face. The second side face limits a contact space above the second contact face and confines the second contact face.

The first contact face is put on the second contact face forming an electrical contact between the first contact face and the second contact face. A circumferential reservoir space is formed between the first side face of the first contact face and the second side face of the second contact face. The reservoir space surrounds the first contact face laterally. A boundary area is laterally arranged around the interface between the first contact face and the second contact face. The gap surrounds the first contact face. A sealing material is filled in the reservoir space. The sealing material is processed to a sealing ring. The sealing ring seals the boundary area around the interface between the first contact face and the second contact face against environmental influence.

The proposed method provides a simple process to produce a sealing of the boundary area of the interface between the first and the second contact face.

In a further embodiment, the sealing material is a fluid. The fluid sealing material is filled at one position in the reservoir or at several positions. Then, the sealing material flows around the circular reservoir space filling up the boundary area of the interface between the first contact space and the second contact space with a fluid sealing ring. Depending on the volume of the filled in sealing material, only a lower ring part of the reservoir space is filled with the sealing material. The fluid sealing ring is cured to a tight sealing ring. The tight sealing ring seals the boundary area of the interface between the first and the second contact face.

The fluid sealing material provides the advantage that it is not necessary to fill the sealing material at every position along the reservoir. Some of the positions are sufficient. In a basic process only one position may be sufficient to fill in the sealing material in the reservoir. The fluid sealing material has the advantage that it flows around the reservoir space filling up the reservoir space with a fluid sealing ring. The fluid sealing ring is cured to a tight sealing ring. Therefore, a save filling up of the gap is attained by simple means.

Depending on the used embodiment, also soft and pasty material may be filled in the reservoir space forming a ring. Then the sealing material is cured to a tight sealing ring.

The sealing material may comprise or may consist of acrylics, polyurethanes, epoxy resins or silicones for example.

In the Figures, which are merely exemplary:
- Fig. 1: shows a perspective view of a part of a first conductor;
- Fig. 2: shows a perspective view of a part of a second conductor;
- Fig. 3: shows a perspective view of an electrical connection with the first conductor and the second conductor;
- Fig. 4: shows the electrical connection of Fig. 3 from a bottom view;
- Fig. 5: shows a first cross-section of the electrical connection of Fig. 3;
- Fig. 6: shows a further cross-sectional view of the electrical connection of Fig. 3;
- Fig. 7: shows a schematic top view on the electrical connection of Fig. 3;
- Fig. 8: shows a cross-sectional view according to Fig. 5 after filling in sealing material in the reservoir space;
- Fig. 9: shows a further cross-sectional view according to Fig. 6 after filling in sealing material in the reservoir space;
- Fig. 10: shows a schematic view of a battery with an electrical conductor system.

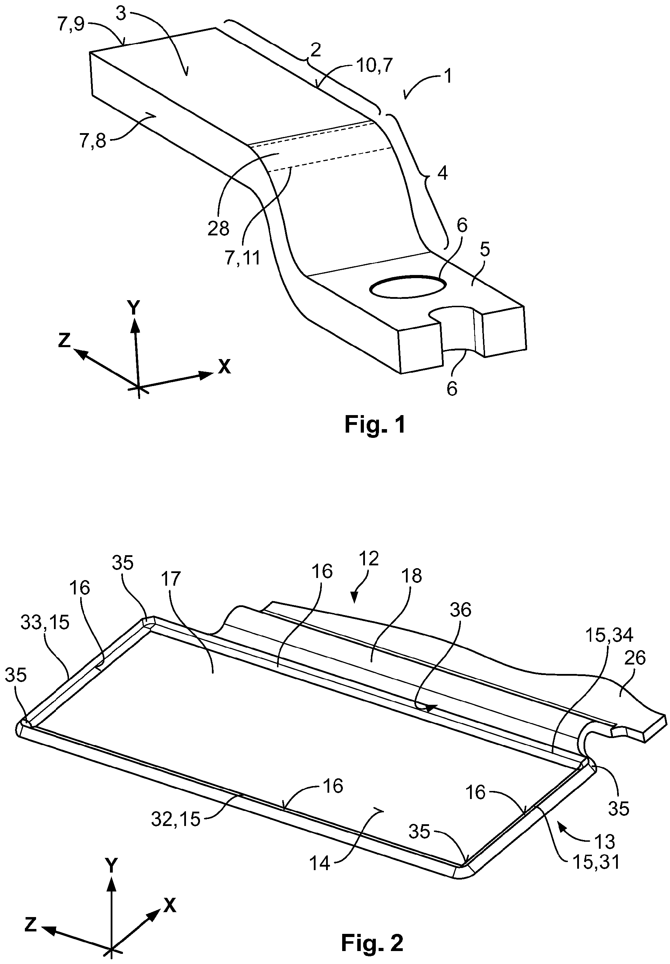

Fig. 1 shows a perspective view of a part of a first conductor 1 in a Cartesian coordinate system with three axis X-Y-Z. In the shown embodiment, the first conductor 1 is in this example embodied as a bus bar. The first connector 1 can also have other shapes as for example the shape of plate or a stripe. The first conductor 1 is embodied as a metal stripe with a bent section. At one end of the first conductor 1 a first section 2 with a first contact face 3 is provided. The first section 2 is connected via a bent section 4 with a first further section 5. The first further section 5 comprises in the shown embodiment holes 6. The first contact face 3 is limited by a first side face 7. The first side face 7 surrounds the first contact face 3. The first contact face 3 is embodied as a plane smooth face. The first side face 7 limits laterally the first contact face 3. The first side face 7 comprises three lateral faces 8, 9, 10 of the first conductor 1. A fourth section of the first side face 7 is provided by a surface 11 of the bent section 4. The surface 11 is curved and extends from the first contact face 3. The surface 11 is in one-piece with the first contact face 3. The fourth section of the first side face 7 is provided by a stripe 28 of the surface 11 of the bent section 4. The stripe 28 is depicted by two parallel dotted lines. The stripe 28 is arranged in parallel to the second lateral face 9.

Furthermore, in a further embodiment, the first contact face 3 may be confined instead by the surface 11 of the bent section 4 by a side surface which is formed in the first section 2. Therefore, the first contact face 3 may be limited by four lateral side faces of the first conductor 1.

The first conductor 1 is made of a metal part, for example cut from a metal plate and bent to the depicted shape. The first further section 5 may also have another shape or another length than shown. Furthermore, depending on the used embodiment, the first contact face 3 may not have a rectangular shape as shown in Fig. 1 but may have also different shapes, for example the shape of a circular area or any other shape. Any metal material may be used for producing the first conductor 1, for example copper can be used. The first conductor 1 may be made of a stripe of copper.

The first contact face 3 is arranged in a Z-X-plane. The first, second and third lateral face are arranged perpendicular to the first contact face 3. However, depending on the embodiment, the first, second and third lateral faces may also be arranged with other angles different from 90° with respect to the first contact face 3. The further first section 5 is arranged in a Z-X-plane parallel to the first section 2. The surface 11 of the bent section 4 has a curved S-shape and is in the shown embodiment arranged perpendicular to a Z-Y-plane. A width of the stripe shape of the first conductor 1 according to an x-axis may be in the range of 15 mm. The thickness of the first conductor section along the Y-axis may for example be in a range of 2.5 mm or more.

Fig. 2 shows a perspective view of a part of a second conductor 12 in a Cartesian coordinate system. The second conductor 12 comprises a second section 13. The second section 13 has a second contact face 14. The second contact face 14 is arranged in a Z-X-plane. The second contact face 14 is surrounded by a rim 15. The rim 15 has an inner circumferential second side face 16 which limits a contact space 17 above the second contact face 14. The second side face 16 is arranged with an angle of 90° with regard to the second contact face 14. Depending on the used embodiment, the second side face may also be arranged with an angle different from 90° with regard to the second contact face 14.

The second contact face 14 is embodied as a plane and smooth face. The second contact face 14 has in the shown embodiment the shape of a rectangular area. Depending on the used embodiment, the second contact face 14 may have a different shape, for example a circular area. Depending on the used embodiment, the second contact face 14 may also have different shapes. In the shown embodiment, the rim 15 surrounds with four rim parts 31, 32, 33, 34 that are connected via rim corners 35 the second contact face 14. At a fourth rim part 34 of the rim 15 a second bent section 18 connects to a second further section 26 of the second conductor 12. The second further section 26 is only partially shown. The second further section 26 may be arranged on the same height and in the same plane as the second contact face 14. An upper surface of the second bent section 18 at least partially forms a part of the fourth part 34 of the rim 15. The second conductor 12 may be formed from a plate or a stripe. The second conductor 12 may be made of metal for example made of aluminium. The contact space 17 may be formed by a stamping process or by any other process which produces a second contact face 14 which is laterally limited by a circumferential second side face 16. The second conductor 12 with the second section 13, the second bent section 18 and the second further section 26 may be formed by folding or bending the second bent section in a plate. As a material for the second conductor 12, any metal and for example aluminium can be used.

The second conductor 12 may be made of a material with a thickness along the y-axis in the range of 0.8 to 1.2 mm for example. The rim 15 may have a height with regard to the second contact face 14 along the Y-axis of about 1 mm. These numbers are only for example.

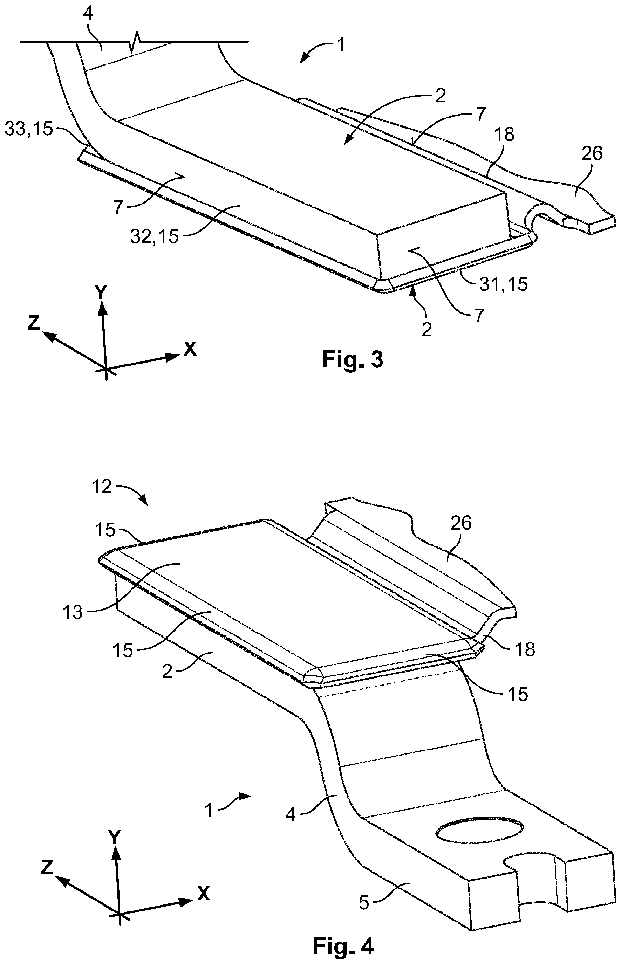

Fig. 3 shows a first process position, wherein the first contact face 3 of the first section 2 of first conductor 1 is arranged on the second contact face 14 within the contact space 17. The shape of the first contact face 3 is smaller than the shape of the second contact face 14. The first contact face 3 and the second contact face 14 are plane and even surfaces and lie on each other and are in contact to each other an interface.

Depending on the used embodiment, there may only be a small lateral distance between the first side face 7 of the first contact face 3 and the second side face 16 of the rim 15. The lateral distance may be smaller than 1 mm, especially in the range of one tenth of a millimetre. This surrounding space forms a reservoir space for filling in sealing material.

The first contact face 3 can be electrically and mechanically connected with the second contact face 14 by a welding process forming a welding layer as an interface between the first and the second contact face 3, 14. For example, an ultrasonic welding process may be used to generate a planar connection layer as a welding layer between the first and the second contact face 3, 14. Furthermore, other welding processes or electrically and mechanically connecting processes and layers may be used. For example, a laser welding process can be used to connect the first and the second contact face 3, 14 in a planar area.

Fig. 4 shows the arrangement of Fig. 3 in a perspective bottom view.

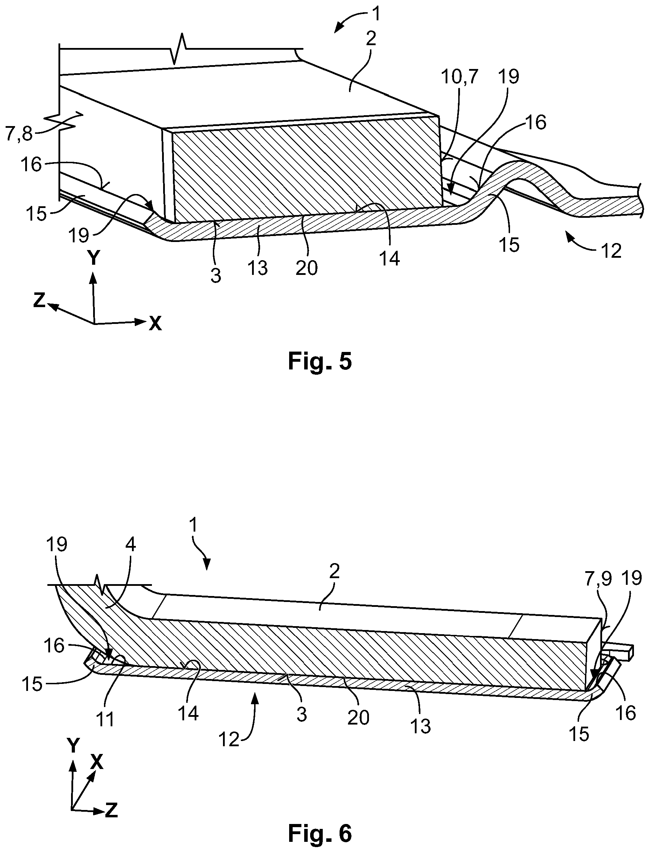

Fig. 5 shows a cross-sectional view along the x-axis of the electrical connection of Fig. 3. Between the third lateral face 10 of the first side face 7 of the first contact face 3 and the second side face 16 of the rim 15 a reservoir space 19 is provided. Also at the opposite side, between the first lateral face 8 of the first side face 7 and the second side face 16 of the rim 15 a reservoir space 19 is provided. The reservoir space 19 surrounds the first section. Additionally, between the first contact face 3 and the second contact face 14, the welding layer 20 is arranged as an interface.

Fig. 6 shows a further cross-sectional view of the electrical connection of Fig. 3 along the Z-axis. Between the second lateral face 9 of the first side face 7 and the inner second side face 16 of the rim 15 a reservoir space 19 is provided. Also between the surface 11 of the bent section 4 and the inner second side face 16 of the rim 15 a reservoir space 19 is provided.

As it can be seen from the Figs. 5 and 6, the rim 15 may also be formed by bent rim areas of the second conductor 12. Furthermore, as discussed above, the contact space 17 may also be stamped in the surface of the second conductor 12. Furthermore, a combination of forming and bending processes may be used to form the second contact face 14 with the second side face 16.

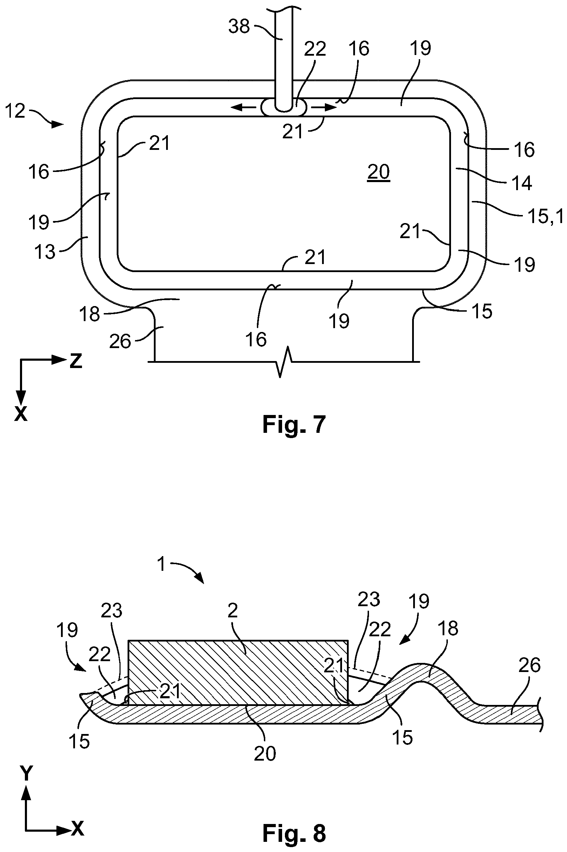

Fig. 7 shows a schematic top view on the arrangement of Fig. 3. In this view only the interface 20 between the first contact face and the second contact face 14 and the second conductor 12 are shown. The interface 20 may be embodied as a welding layer. Further parts of the first conductor are not shown. In this view it can be clearly seen that the reservoir space 19 surrounds the interface 20. The sealing material can now be filled in the reservoir space 19. The sealing material may be soft and pasty and be filled in the reservoir with applicable methods. In a further embodiment, the sealing material may be a fluid sealing material 22 that can be filled in or dosed in the reservoir space 19 by a nozzle 38. In one embodiment, the sealing material is filled in at one position or at several positions in the reservoir space 19. Then the fluid sealing material 22 flows around the reservoir space 19, filling up a ring gap 21 adjacent to the interface 20.

After forming a fluid ring, the sealing material is cured to a tight sealing ring protecting the interface 20.

Fig. 8 shows a cross-sectional view in an Y-X-plane according to Fig. 4 after filling in the sealing material 22 in the reservoir space 19.

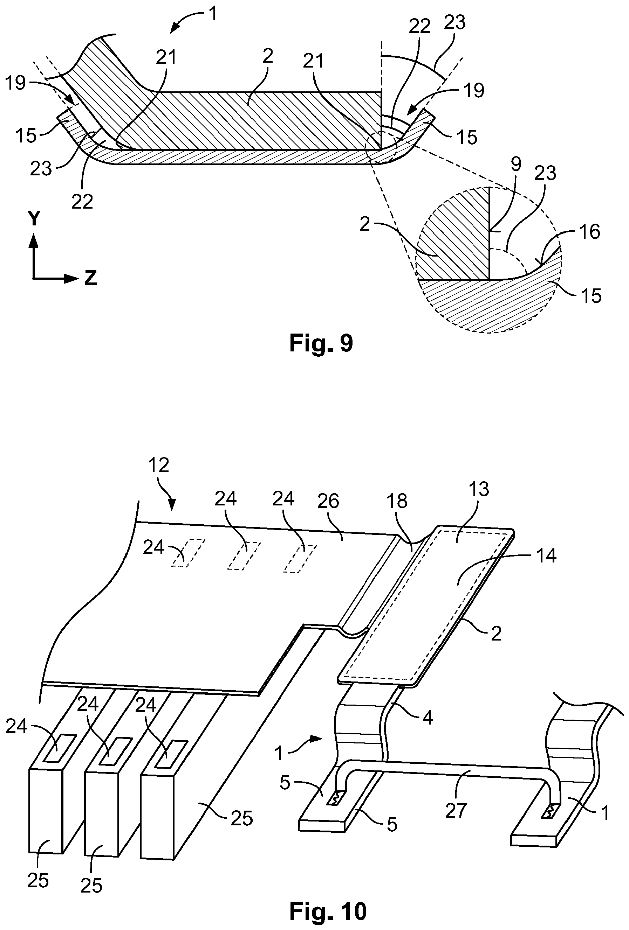

Fig. 9 shows a cross-sectional view in an Y-Z-plane according to Fig. 6 after filling in the sealing material 22 in the reservoir space 19. After filling in the sealing material 22 in the reservoir space 19 and forming a circumferential sealing ring, the sealing material 22 is cured to a circumferential tight sealing ring that seals the gap 21.

Fig. 9 shows an enlarged partial view of the second lateral face 9 of the first side face 7 of the second section 2 and the second side face 16 of the rim 15. Experiments have shown that an opening angle 23 of a cross-section shape of the reservoir space 19 of about 45° or less is of advantage. The smaller the opening angle 23, the less sealing material 22 is necessary to form a circumferential sealing ring. By using a fluid material, a small cross-section of the reservoir space does not disturb the save and precise forming of the circumferential sealing ring adjacent to the ring gap 21 around the interface 20.

Fig. 10 shows one possible application of the proposed connection between a first conductor 1 and a second conductor 12. A battery with several battery cells 25 is connected via an electrical conductor system with a further battery. The conductor system comprises a second conductor 12. The second conductor 12 is connected with electrical battery contacts 24 of several battery cells 25. The battery contacts 24 are connected with the second further section 26 of the second conductor 12. The second further section 26 is connected via the second bent section 18 with the second section 13. Depending on the used embodiment, the bent section may be omitted. The second section 13 is embodied as discussed above and comprises at a bottom the second contact face 14. The second contact face 14 is schematically depicted with a dotted line. The second contact face 14 is connected with the first contact face 3 of a first conductor 1 as explained above. Furthermore, the interface between the first and the second contact face is sealed by a sealing ring as explained above. The first further section 5 of the first conductor 1 can be electrically connected for example by an electrical line 27 with a further electrical component or for example with a further first conductor 1. The electrical line 27 may be embodied as a module connection which connects at least two batteries, wherein each battery may have at least one battery cell.

The further first conductor 1 can also be connected with a further second conductor 12 and with further battery cells 25. Therefore, a battery with an electrical conductor system is provided with at least one battery cell 25 which comprises an electrical connection with a first and a second conductor 1, 12 that are connected via first and second contact faces 3, 14, wherein the interface between the first and second contact faces is sealed by a sealing ring as explained above.

The second conductor 12 is a plate for example an aluminium plate. The first conductor 1 is a plate for example a busbar made of copper.

The battery system may for example be arranged in a car. Especially for electrical connections in a car which experience a lot of shocks or vibrations by driving the car, a safe and secure connection between the first and the second conductor are highly appreciated. The sealing ring not only protects the electrical interface between the first and the second contact face against environmental influences, for example humidity and oxygen. Furthermore, the sealing material and the circumferential arrangement of the first contact face within the contact space and the lateral arrangement of the second side face of the rim 15 improves the mechanical fixing in a lateral direction.

Nevertheless, the proposed connection of the first and the second conductor are not limited to the application in a battery system but can also be used in any electrical connections.

### Reference List

- 1: first conductor
- 2: first section
- 3: first contact face
- 4: bent section
- 5: first further section
- 6: hole
- 7: first side face
- 8: first lateral face
- 9: second lateral face
- 10: third lateral face
- 11: surface
- 12: second conductor
- 13: second section
- 14: second contact face
- 15: rim
- 16: second side face
- 17: contact space
- 18: second bent section
- 19: reservoir space
- 20: electrical interface
- 21: gap
- 22: sealing material
- 23: opening angle
- 24: battery contact
- 25: battery cell
- 26: second further section
- 27: electrical line
- 28: stripe of surface
- 31: first rim part
- 32: second rim part
- 33: third rim part
- 34: fourth rim part
- 35: corner
- 38: nozzle

## Claims

1. Electrical connection between a first conductor (1) and a second conductor (12), wherein the first conductor (1) and the second conductor (12) are made of electrical conductive material, wherein the first conductor has a first section (2) with a first contact face (3), wherein the first contact face (3) is laterally limited by a first side face (7), wherein the second conductor (12) has a second section (13) with a second contact face (14), wherein the second contact face (14) is surrounded by a rim (15) with a second side face (16), wherein the second side face (16) limits a contact space (17) above the second contact face (14), wherein the first contact face (3) is arranged on the second contact face (14), wherein a reservoir space (19) is arranged between the first side face (7) of the first contact face (3) and the second side face (16) of the rim (15), wherein the reservoir space (19) surrounds the first contact face (3), wherein a sealing material (22) is arranged in the reservoir space (19), wherein the sealing material (22) forms a sealing ring, wherein the sealing ring seals an interface (20) between the first contact face (3) and the second contact face (14) against environmental influence,
**characterized in that**,
the first and the second side faces (7, 16) limit the reservoir space (19) with a cross section that narrows in direction to the second contact face (14).

2. The connection of claim 1, wherein the first contact face (3) and the second contact face (14) are electrically and mechanically connected in the contact space by a welding layer (20).

3. The connection of any one of the preceding claims, wherein the rim (15) with the second side face (16) is produced by a forming process, especially by a stamping process.

4. The connection of any one of the preceding claims, wherein the cross section has an opening angle (23) of about 45°, preferably less than 45°.

5. The connection of any one of the preceding claims, wherein the first section (2) is embodied in one piece with a first further section (5), wherein the first further section (5) is connected with the first section (2) by a bent section (4), wherein the bent section (4) is guided away from the first section (2), and wherein a surface (11) of the bent section (4) is a part of the first side face (7).

6. The connection of any one of the preceding claims, wherein the second section (13) is embodied in one piece with a second further section (26), wherein the second further section (26) is connected with the second section (13) by a second bent section (18), wherein the second bent section (18) is guided away from the second section (13), wherein the second bent section (18) forms a part of a second side face (16) of the rim (15).

7. The connection of any one of the preceding claims, wherein the first conductor (1) and the second conductor (12) are made of different metal materials, wherein for example the first conductor is made of copper and the second conductor is made of aluminium.

8. Battery (25) with an electrical conductor system which comprises the electrical connection according to any one of the preceding claims.

9. The battery (25) of claim 8, wherein the second conductor (12) is connected with at least one electrical contact (24) of the battery (25).

10. The battery (25) of claim 8 or 9, wherein the first conductor (1) is electrically connected via a further conducting line (27) with an electrical conductor system of a further battery.

11. Method for producing a connection between a first and a second conductor (1, 12), wherein a first conductor (1) and a second conductor (12) are provided, wherein the first conductor (1) and the second conductor (12) are made of electrical conductive material, wherein the first conductor (1) has a first section (2) with a first contact face (3), wherein the first contact face (3) is laterally limited by a first side face (7), wherein the second conductor (12) has a second section (13) with a second contact face (14), wherein the second contact face (14) is surrounded by a rim (15) with a second side face (16), wherein the second side face (16) limits a contact space (17) above the second contact face (14), wherein the first contact face (3) is put on the second contact face (14) forming an electrical contact with the first contact face (3), wherein a reservoir space (19) is arranged between the first side face (7) of the first contact face (3) and the second side face (16) of the second contact face (14), wherein the reservoir space (19) surrounds the first contact face (3), wherein an electrical interface is arranged between the first contact face (3) and the second contact face (14), wherein a sealing material (22) is deposited in the reservoir space (19), wherein the sealing material (22) is processed to a sealing ring, wherein the sealing ring seals the electrical interface between the first contact face (3) and the second contact face (14) against environmental influence, **characterized in that** the first and the second side faces (7, 16) limit the reservoir space (19) with a cross section that narrows in direction to the second contact face (14).

12. Method of claim 11, wherein the sealing material (22) is fluid, wherein the fluid sealing material (22) is filled at a position in the reservoir space (19), wherein the fluid sealing material (22) flows around the interface filling up at least partially the reservoir space (19) with a fluid sealing ring, wherein the sealing ring is cured to a tight sealing ring.

13. Method of claim 11 or 12, wherein the sealing material (22) comprises or is made of acrylics, polyurethanes, epoxy resins or silicones.

## Patentansprüche

1. Elektrische Verbindung zwischen einem ersten Leiter (1) und einem zweiten Leiter (12), wobei der erste Leiter (1) und der zweite Leiter (12) aus elektrisch leitfähigem Material hergestellt sind, wobei der erste Leiter einen ersten Abschnitt (2) mit einer ersten Kontaktfläche (3) aufweist, wobei die erste Kontaktfläche (3) lateral durch eine erste Seitenfläche (7) begrenzt ist, wobei der zweite Leiter (12) einen zweiten Abschnitt (13) mit einer zweiten Kontaktfläche (14) aufweist, wobei die zweite Kontaktfläche (14) von einem Rand (15) mit einer zweiten Seitenfläche (16) umgeben ist, wobei die zweite Seitenfläche (16) einen Kontaktraum (17) über der zweiten Kontaktfläche (14) begrenzt, wobei die erste Kontaktfläche (3) an der zweiten Kontaktfläche (14) angeordnet ist, wobei ein Reserveraum (19) zwischen der ersten Seitenfläche (7) der ersten Kontaktfläche (3) und der zweiten Seitenfläche (16) des Randes (15) angeordnet ist, wobei der Reserveraum (19) die erste Kontaktfläche (3) umgibt, wobei ein Dichtmaterial (22) im Reserveraum (19) angeordnet ist, wobei das Dichtmaterial (22) einen Dichtungsring bildet, wobei der Dichtungsring eine Zwischenfläche (20) zwischen der ersten Kontaktfläche (3) und der zweiten Kontaktfläche (14) gegen Umwelteinflüsse abdichtet,
**dadurch gekennzeichnet, dass**
die erste und die zweite Seitenfläche (7, 16) den Reserveraum (19) mit einem Querschnitt begrenzen, der sich in Richtung der zweiten Kontaktfläche (14) verengt.

2. Verbindung nach Anspruch 1, wobei die erste Kontaktfläche (3) und die zweite Kontaktfläche (14) im Kontaktraum durch eine Schweißschicht (20) elektrisch und mechanisch verbunden sind.

3. Verbindung nach einem der vorhergehenden Ansprüche, wobei der Rand (15) mit der zweiten Seitenfläche (16) durch einen Formungsprozess, insbesondere durch einen Stanzprozess, produziert wird.

4. Verbindung nach einem der vorhergehenden Ansprüche, wobei der Querschnitt einen Öffnungswinkel (23) von etwa 45°, vorzugsweise weniger als 45° aufweist.

5. Verbindung nach einem der vorhergehenden Ansprüche, wobei der erste Abschnitt (2) einstückig mit einem ersten weiteren Abschnitt (5) ausgeführt ist, wobei der erste weitere Abschnitt (5) mit dem ersten Abschnitt (2) durch einen gebogenen Abschnitt (4) verbunden ist, wobei der gebogene Abschnitt (4) vom ersten Abschnitt (2) weg geführt wird und wobei eine Oberfläche (11) des gebogenen Abschnitts (4) ein Teil der ersten Seitenfläche (7) ist.

6. Verbindung nach einem der vorhergehenden Ansprüche, wobei der zweite Abschnitt (13) einstückig mit einem zweiten weiteren Abschnitt (26) ausgeführt ist, wobei der zweite weitere Abschnitt (26) mit dem zweiten Abschnitt (13) durch einen zweiten gebogenen Abschnitt (18) verbunden ist, wobei der zweite gebogene Abschnitt (18) vom zweiten Abschnitt (13) weg geführt wird, wobei der zweite gebogene Abschnitt (18) einen Teil einer zweiten Seitenfläche (16) des Randes (15) bildet.

7. Verbindung nach einem der vorhergehenden Ansprüche, wobei der erste Leiter (1) und der zweite Leiter (12) aus unterschiedlichen Metallmaterialien gefertigt sind, wobei beispielsweise der erste Leiter aus Kupfer gefertigt ist und der zweite Leiter aus Aluminium gefertigt ist.

8. Batterie (25) mit einem elektrischen Leitersystem, das die elektrische Verbindung nach einem der vorhergehenden Ansprüche umfasst.

9. Batterie (25) nach Anspruch 8, wobei der zweite Leiter (12) mit zumindest einem elektrischen Kontakt (24) der Batterie (25) verbunden ist.

10. Batterie (25) nach Anspruch 8 oder 9, wobei der erste Leiter (1) über eine weitere leitende Leitung (27) elektrisch mit einem elektrischen Leitersystem einer weiteren Batterie verbunden ist.

11. Verfahren zur Herstellung einer Verbindung zwischen einem ersten und einem zweiten Leiter (1, 12), wobei ein erster Leiter (1) und ein zweiter Leiter (12) bereitgestellt sind, wobei der erste Leiter (1) und der zweite Leiter (12) aus elektrisch leitfähigem Material gefertigt sind, wobei der erste Leiter (1) einen ersten Abschnitt (2) mit einer ersten Kontaktfläche (3) aufweist, wobei die erste Kontaktfläche (3) lateral durch eine erste Seitenfläche (7) begrenzt ist,
wobei der zweite Leiter (12) einen zweiten Abschnitt (13) mit einer zweiten Kontaktfläche (14) aufweist, wobei die zweite Kontaktfläche (14) von einem Rand (15) mit einer zweiten Seitenfläche (16) umgeben ist, wobei die zweite Seitenfläche (16) einen Kontaktraum (17) über der zweiten Kontaktfläche (14) begrenzt, wobei die erste Kontaktfläche (3) auf die zweite Kontaktfläche (14) gesetzt wird, einen elektrischen Kontakt mit der ersten Kontaktfläche (3) bildend, wobei ein Reserveraum (19) zwischen der ersten Seitenfläche (7) der ersten Kontaktfläche (3) und der zweiten Seitenfläche (16) der zweiten Kontaktfläche (14) angeordnet ist, wobei der Reserveraum (19) die erste Kontaktfläche (3) umgibt, wobei eine elektrische Zwischenfläche zwischen der ersten Kontaktfläche (3) und der zweiten Kontaktfläche (14) angeordnet ist, wobei ein Dichtmaterial (22) im Reserveraum (19) aufgetragen wird, wobei ein Dichtmaterial (22) zu einem Dichtungsring verarbeitet wird, wobei der Dichtungsring die elektrische Zwischenfläche zwischen der ersten Kontaktfläche (3) und der zweiten Kontaktfläche (14) gegen Umwelteinflüsse abdichtet, **dadurch gekennzeichnet, dass** die erste und die zweite Seitenfläche (7, 16) den Reserveraum (19) mit einem Querschnitt begrenzen, der sich in Richtung der zweiten Kontaktfläche (14) verengt.

12. Verfahren nach Anspruch 11, wobei das Dichtmaterial (22) fluidisch ist, wobei das fluidische Dichtmaterial (22) an einer Position in den Reserveraum (19) gefüllt wird, wobei das fluidische Dichtmaterial (22) über die Zwischenfläche fließt, zumindest teilweise den Reserveraum (19) mit einem fluidischen Dichtungsring füllend, wobei der Dichtungsring auf einen festen Dichtungsring ausgehärtet wird.

13. Verfahren nach Anspruch 11 oder 12, wobei das Dichtmaterial (22) Acryle, Polyurethane, Epoxidharze oder Silikone umfasst oder daraus gefertigt ist.

## Revendications

1. Connexion électrique entre un premier conducteur (1) et un second conducteur (12), le premier conducteur (1) et le second conducteur (12) étant constitués de matériau électriquement conducteur, le premier conducteur possédant une première section (2) dotée d'une première face (3) de contact, la première face (3) de contact étant latéralement limitée par une première face latérale (7), le second conducteur (12) possédant une seconde section (13) dotée d'une seconde face (14) de contact, la seconde face (14) de contact étant entourée par un rebord (15) doté d'une seconde face latérale (16), la seconde face latérale (16) limitant un espace (17) de contact au-dessus de la seconde face (14) de contact, la première face (3) de contact étant disposée sur la seconde face (14) de contact, un espace (19) de réservoir étant aménagé entre la première face latérale (7) de la première face (3) de contact et la seconde face latérale (16) du rebord (15), l'espace (19) de réservoir entourant la première face (3) de contact, un matériau (22) d'étanchéité étant disposé dans l'espace (19) de réservoir, le matériau (22) d'étanchéité formant une bague d'étanchéité, la bague d'étanchéité étanchéifiant une interface (20) entre la première face (3) de contact et la seconde face (14) de contact contre l'influence environnementale,
**caractérisé en ce que**
les première et seconde faces latérales (7, 16) limitent l'espace (19) de réservoir avec une section droite qui se rétrécit en direction de la seconde face (14) de contact.

2. Connexion selon la revendication 1, la première face (3) de contact et la seconde face (14) de contact étant liées électriquement et mécaniquement dans l'espace de contact par une couche (20) de soudure.

3. Connexion selon l'une quelconque des revendications précédentes, le rebord (15) doté de la seconde face latérale (16) étant produit par un processus de formage, en particulier par un processus d'estampage.

4. Connexion selon l'une quelconque des revendications précédentes, la section droite présentant un angle (23) d'ouverture d'environ 45°, de préférence inférieur à 45°.

5. Connexion selon l'une quelconque des revendications précédentes, la première section (2) étant réalisée d'un seul tenant avec une première section supplémentaire (5), la première section supplémentaire (5) étant liée à la première section (2) par une section coudée (4), la section coudée (4) étant guidée de façon à s'écarter de la première section (2), et une surface (11) de la section coudée (4) faisant partie de la première face latérale (7).

6. Connexion selon l'une quelconque des revendications précédentes, la seconde section (13) étant réalisée d'un seul tenant avec une seconde section supplémentaire (26), la seconde section supplémentaire (26) étant liée à la seconde section (13) par une seconde section coudée (18), la seconde section coudée (18) étant guidée de façon à s'écarter de la seconde section (13), la seconde section coudée (18) faisant partie d'une seconde face latérale (16) du rebord (15).

7. Connexion selon l'une quelconque des revendications précédentes, le premier conducteur (1) et le second conducteur (12) étant constitués de matériaux métalliques différents, par exemple le premier conducteur étant constitué de cuivre et le second conducteur étant constitué d'aluminium.

8. Batterie (25) dotée d'un système de conducteurs électriques qui comporte la connexion électrique selon l'une quelconque des revendications précédentes.

9. Batterie (25) selon la revendication 8, le second conducteur (12) étant raccordé avec au moins un contact électrique (24) de la batterie (25).

10. Batterie (25) selon la revendication 8 ou 9, le premier conducteur (1) étant raccordé électriquement via une ligne conductrice supplémentaire (27) avec un système de conducteurs électriques d'une batterie supplémentaire.

11. Procédé de production d'une connexion entre un premier et un second conducteur (1, 12), un premier conducteur (1) et un second conducteur (12) étant mis en place, le premier conducteur (1) et le second conducteur (12) étant constitués de matériau électriquement conducteur, le premier conducteur (1) possédant une première section (2) dotée d'une première face (3) de contact, la première face (3) de contact étant latéralement limitée par une première face latérale (7), le second conducteur (12) possédant une seconde section (13) dotée d'une seconde face (14) de contact, la seconde face (14) de contact étant entourée par un rebord (15) doté d'une seconde face latérale (16), la seconde face latérale (16) limitant un espace (17) de contact au-dessus de la seconde face (14) de contact, la première face (3) de contact étant placée sur la seconde face (14) de contact formant un contact électrique avec la première face (3) de contact, un espace (19) de réservoir étant aménagé entre la première face latérale (7) de la première face (3) de contact et la seconde face latérale (16) de la seconde face (14) de contact, l'espace (19) de réservoir entourant la première face (3) de contact, une interface électrique étant aménagée entre la première face (3) de contact et la seconde face (14) de contact, un matériau (22) d'étanchéité étant déposé dans l'espace (19) de réservoir, le matériau (22) d'étanchéité étant traité pour donner une bague d'étanchéité, la bague d'étanchéité étanchéifiant l'interface électrique entre la première face (3) de contact et la seconde face (14) de contact contre l'influence environnementale, **caractérisé en ce que** les première et seconde faces latérales (7, 16) limitent l'espace (19) de réservoir avec une section droite qui se rétrécit en direction de la seconde face (14) de contact.

12. Procédé selon la revendication 11, le matériau (22) d'étanchéité étant un fluide, le matériau (22) d'étanchéité fluide remplissant une position dans l'espace (19) de réservoir, le matériau (22) d'étanchéité fluide circulant autour de l'interface en remplissant au moins partiellement l'espace (19) de réservoir avec une bague d'étanchéité fluide, la bague d'étanchéité étant durcie en une bague d'étanchéité hermétique.

13. Procédé selon la revendication 11 ou 12, le matériau (22) d'étanchéité comportant ou étant constitué d'acryliques, de polyuréthanes, de résines époxy ou de silicones.
